# EUROPÄISCHE PATENTANMELDUNG

(11) **EP 1 790 883 A1**
(43) Veröffentlichungstag der Anmeldung: **30.05.2007**
(21) Anmeldenummer: 05025688.2
(22) Anmeldetag: 24.11.2005
(51) Int. Cl.: F16J 9/14, F01D 11/02, F01D 11/00

(54) **Dichtungsanordnung für eine Strömungsmaschine**

(71) Anmelder: SIEMENS AKTIENGESELLSCHAFT, 80333 München (DE)
(72) Erfinder: Kleinhaus, Michael, 45475 Mülheim an der Ruhr (DE); Neef, Matthias, Dr., 45468 Mülheim an der Ruhr (DE); Sürken, Norbert, 45468 Mülheim an der Ruhr (DE)

(57) **Zusammenfassung**

Die Erfindung betrifft eine Dichtungsanordnung (11) für eine Strömungsmaschine zur Verminderung einer Leckageströmung in einem Spalt zwischen einem ersten Bauteil (13) und einem zweiten Bauteil (12),
wobei die Dichtungsanordnung (11) zumindest zwei Segmente (14, 14') umfasst,
wobei im Betrieb eine Leckageströmung in einer Leckageströmungsrichtung (3) durch den Spalt strömt,
wobei die Segmente (14, 14') Anlageflächen zum Anlegen der Segmente (14, 14') aneinander aufweisen,
wobei die Anlageflächen aus zumindest drei zueinander versetzten Teilanlegestirnflächen (17, 18, 19) gebildet sind.

## Beschreibung

Die Erfindung betrifft eine Dichtungsanordnung zum Vermindern einer Leckageströmung in einem Spalt zwischen einem ersten Bauteil und einem zweiten Bauteil, wobei die Dichtungsanordnung zumindest zwei Segmente umfasst, wobei im Betrieb eine Leckageströmung in einer Leckageströmungsrichtung durch den Spalt strömt, wobei die Segmente ein Befestigungsoberteil zur Befestigung an das erste oder zweite Bauteil und eine an die Leckageströmung angrenzende Dichtfläche aufweisen, wobei die Segmente Anlageflächen zum Anlegen der Segmente aneinander aufweisen.

Bei einer Dampfturbinenkonstruktion ist es erwünscht, die Zahl der Dampfleckpfade möglichst gering zu halten oder ganz zu eliminieren. Dazu sind Dichtungen zwischen den rotierenden und stationären Komponenten vorgesehen. Die Abdichtung zur rotierenden Komponente erfolgt häufig nicht direkt zu feststehenden Komponenten mittels beweglich angebrachter Dichtungsringsegmente. Die bogenförmigen Dichtungsringsegmente sind üblicher Weise in einer ringförmigen Vertiefung in der stationären Komponente angeordnet, die konzentrisch um die Drehachse des Rotors ausgebildet ist. Jedes bogenförmige Dichtungssegment weist eine bogenförmige Dichtungsfläche auf.

Bei nahezu allen rotierenden Energiewandlungsmaschinen, wie z. B. Verdichtern, Pumpen, Gas- und Dampfturbinen usw., werden solche Dichtungen in Segmentbauweise eingesetzt. Diese können beispielsweise in Wellendichtungen oder auch zur Abdichtung unter den Leitschaufeln oder über den Laufschaufeln verwendet werden. Diese Segmente werden ringförmig um eine Welle angeordnet und weisen mehrere Teilsegmente pro Ring auf. Bei großen axialen Druckdifferenzen werden üblicher Weise mehrere Segmentringe hintereinander angeordnet. Stoßspiele zwischen den Segmenten sind in Umfangsrichtung unvermeidbar. Bei thermisch hoch belasteten Dampfturbinen werden die Stoßspiele an wichtigen Dichtstellen vergrößert ausgeführt, um ein Abheben des Segmentringes zu verhindern. Diese Stoßspalten sind üblicherweise als reine Tangentialschnitte mit einer ebenen Anlagestirnfläche ausgeführt. Die konstruktive Gestaltung der Stoßspalte führt auf jeden Fall zu einem zusätzlichen Pfad für einen Leckagestrom. Dieser zusätzliche Leckagestrom führt jeweils zu Leistungs- und damit zu Wirkungsgradverlusten.

Dementsprechend besteht ein Bedarf nach einer verbesserten Dichtung zwischen einzelnen Dichtungsringsegmenten.

Aufgabe der Erfindung ist es daher, eine verbesserte Dichtung anzugeben, die den Leckagestrom vermindert.

Die Aufgabe wird gelöst durch eine Dichtungsanordnung zum Vermindern einer Leckageströmung in einem Spalt zwischen einem ersten Bauteil und einem zweiten Bauteil, wobei die Dichtungsanordnung zumindest zwei Segmente umfasst, wobei im Betrieb eine Leckageströmung in einer Leckageströmungsrichtung durch den Spalt strömt, wobei die Segmente ein Befestigungsoberteil zur Befestigung an das erste oder zweite Bauteil und eine an die Leckageströmung angrenzende Dichtfläche aufweisen, wobei die Segmente Anlageflächen zum Anlagen der Segmente aneinander aufweisen, wobei die Anlageflächen aus zumindest drei zueinander versetzten Teilanlegestirnflächen gebildet sind.

Die Erfindung geht von dem Aspekt aus, dass ein durch zwei Segmente hindurchtretender Leckagestrom minimiert werden kann, indem die Anlagefläche erfindungsgemäß ausgebildet wird. Die Anlagefläche wird hierbei nicht als eine ebene Fläche ausgeführt, sondern erfindungsgemäß aus drei zueinander versetzten Teilanlegestirnflächen gebildet. Ein zwischen den Segmenten hindurchströmender Leckagedampf erfährt hierdurch ein Hindernis, indem keine gerade Strömungsrichtung zwischen den einzelnen Segmenten nunmehr möglich ist. Vielmehr muss der Leckagestrom Kurven beschreiben, was naturgemäß zu Strömungsverlusten und damit zu einer Reduzierung der Leckageströmung führt.

Dabei weisen die Segmente zueinander komplementäre Teilanlegestirnflächen auf. Dies führt dazu, dass die Segmente gegeneinander mit möglichst wenig Spiel angelegt werden können. Um die Segmentspaltleckage in axialer Richtung zu vermindern lässt man die Anlagefläche auf z. B. halber Segmentbreite in einer Umfangsrichtung verspringen, so dass eine axiale Dichtfläche entsteht. Der Dichtungseffekt wird verstärkt, da die Stoßspalte jetzt keine fluchtende Anordnung mehr aufweisen. In einer vorteilhaften Weiterbildung wird die erste Teilanlegefläche durch eine Translation gegenüber der zweiten Teilanlegefläche gebildet, wobei die Translation entlang einer zur Leckageströmungsrichtung im Wesentlichen senkrecht stehenden Senkrechtgeraden erfolgt, wobei die Senkrechtgerade parallel zu einer Normalen der Dichtfläche liegt, wobei eine zwischen der ersten und der zweiten Teilanlegefläche gebildete erste Teilanlegetrenngerade im Wesentlichen senkrecht zur Dichtfläche angeordnet ist und bei der die dritte Teilanlegefläche durch eine Translation gegenüber der ersten und der zweiten Teilanlegefläche gebildet ist, wobei die Translation entlang der Senkrechtgeraden und der Normalen erfolgt, wobei eine zwischen der dritten und zweiten oder zwischen der dritten und ersten Teilanlegefläche gebildete zweite Teilanlegetrenngerade im Wesentlichen parallel zur Leckageströmungsrichtung angeordnet ist.

Dadurch wird der Vorteil erreicht, dass ein auf ein Segment zuströmender Leckagestrom durch den in Strömungsrichtung angeordneten Versprung sozusagen abgebremst wird. Des Weiteren kann ein zusätzlicher Leckagestrom, der sich von der Dichtfläche zum Befestigungsoberteil ausbreitet, in seiner Strömungsrichtung ebenfalls abgebremst werden. Dadurch wird sowohl eine axiale als auch eine radiale Anströmung einer Leckageströmung wirksam gebremst.

In einer vorteilhaften Weiterbildung ist die dritte Teilanlegefläche aus einer vierten und einer fünften Teilanlegefläche gebildet, wobei die vierte Teilanlegefläche durch eine Translation gegenüber der fünften Teilanlegefläche gebildet wird, wobei die Translation entlang der Senkrechtgeraden und der Normalen erfolgt, wobei eine zwischen der vierten und fünften Teilanlegefläche gebildete dritte Teilanlegetrenngerade im Wesentlichen senkrecht zur Dichtfläche angeordnet ist.

Die Erfindung geht hierbei von dem Aspekt aus, dass eine wirksame Reduzierung der Leckageströmung weiter erhöht werden kann, wenn die einzelnen Teilanlegeflächen noch weiter geteilt werden. Dadurch erfährt die Leckageströmung einen größeren Strömungswiderstand, indem die Leckageströmung durch abknickende Stoßspalten gebremst wird.

In einer vorteilhaften Weiterbildung ist die dritte, vierte und fünfte Teilanlegefläche, entlang derjenigen Senkrechten gesehen, die im Wesentlichen senkrecht zur Normalen ist, oberhalb der ersten und zweiten Teilanlegefläche angeordnet.

In einer weiteren vorteilhaften Weiterbildung ist die Dichtfläche zum Aufnehmen von Dichtmitteln, wie z. B. einer Labyrinthdichtung oder eine Bürstendichtung ausgebildet.

Zweckdienlicherweise ist das zweite Bauteil relativ zum ersten Bauteil bewegbar ausgebildet. Insbesondere ist das erste Bauteil als Gehäuse, insbesondere als Innengehäuse, und das zweite Bauteil als Turbinenwelle ausgebildet.

In einer weiteren vorteilhaften Weiterbildung ist die Dichtungsanordnung zur Anwendung in einer Strömungsmaschine ausgebildet.

In einer vorteilhaften Weiterbildung weisen die Segmente Vorsprünge auf, die zum Aufnehmen in eine Nut ausgebildet sind.

Weitere vorteilhafte Weiterbildungen sind in den Unteransprüchen beschrieben.

Ausführungsbeispiele der Erfindung werden nachfolgend unter Bezugnahme auf die Zeichnungen näher beschrieben. Dabei haben mit demselben Bezugszeichen versehene Komponenten die gleiche Funktionsweise. Dabei zeigen:
- Figur 1: eine gemäß dem Stand der Technik ausgebildete Dichtungsanordnung zwischen einer rotierenden und einer feststehenden Komponente
- Figur 2: eine perspektivische Darstellung einer Dichtungsanordnung
- Figur 3: eine Seitenansicht der Dichtungsanordnung
- Figur 4: eine Vorderansicht der Dichtungsanordnung
- Figur 5: eine Sicht von oben auf die Dichtungsanordnung
- Figur 6: eine perspektivische Darstellung einer alternativen Ausführungsform der Dichtungsanordnung
- Figur 7: eine perspektivische Darstellung eines einzelnen Segmentes einer Dichtungsanordnung gemäß dem Stand der Technik
- Figur 8: eine perspektivische Darstellung eines Segmentes mit zwei Teilflächen
- Figur 9: eine perspektivische Darstellung eines Segmentes mit zwei Teilflächen
- Figur 10: eine perspektivische Darstellung eines Segmentes
- Figur 11: eine perspektivische Darstellung einer alternativen Ausführungsform eines Segmentes.

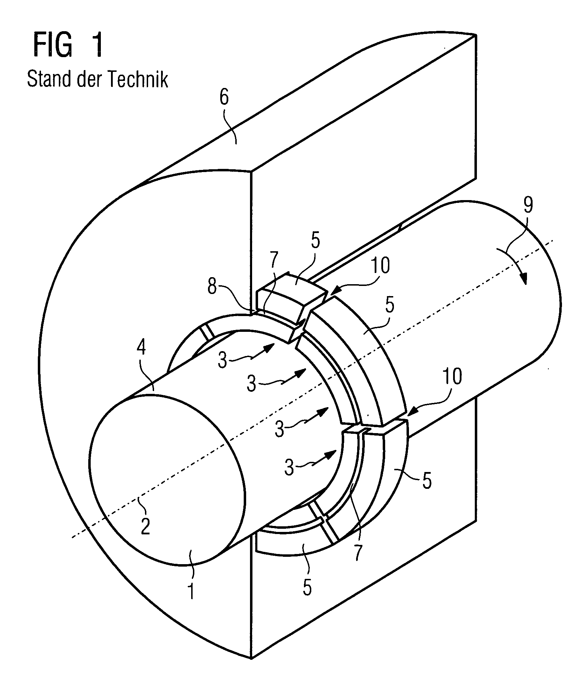

In der Figur 1 ist eine perspektivische Darstellung einer Dichtungsanordnung gemäß dem Stand der Technik zu sehen. Ein rotierendes Bauteil 1, wie z. B. ein Rotor oder eine Welle eines Verdichters, einer Dampfturbine, einer Gasturbine oder ähnlichen Strömungsmaschinen, ist um eine Rotationsachse 2 drehbar gelagert. Im Betrieb strömt eine in der Rotationsrichtung 2 gerichtete Leckageströmung entlang der Rotoroberfläche 4. Diese Leckageströmung ist unerwünscht und wird durch die Segmente 5 abgebremst. Die Segmente 5 sind an einem feststehenden Bauteil 6 angeordnet. In der Figur 1 ist das feststehende Bauteil 6 perspektivisch dargestellt, wobei lediglich eine Hälfte des im Regelfall rotationssymmetrisch ausgebildeten Bauteils zu sehen ist. Die einzelnen Segmente 5 weisen Nuten 7 auf, die derart ausgebildet sind, dass sie in einen entsprechend ausgebildeten Vorsprung 8 gehaltert werden können. Die einzelnen Segmente 5 sind in Richtung der Leckageströmung 3 gesehen, fluchtend aneinander geordnet. In Umfangsrichtung 9 gesehen bilden sich dadurch Stoßspiele 10 aus. Die Stoßspiele 10 sind in der Figur 1 übertrieben dargestellt. Nachteilig in dieser Ausführungsform ist, dass ein vergleichsweise großer Leckagestrom durch diese Stoßspiele 10 strömen kann.

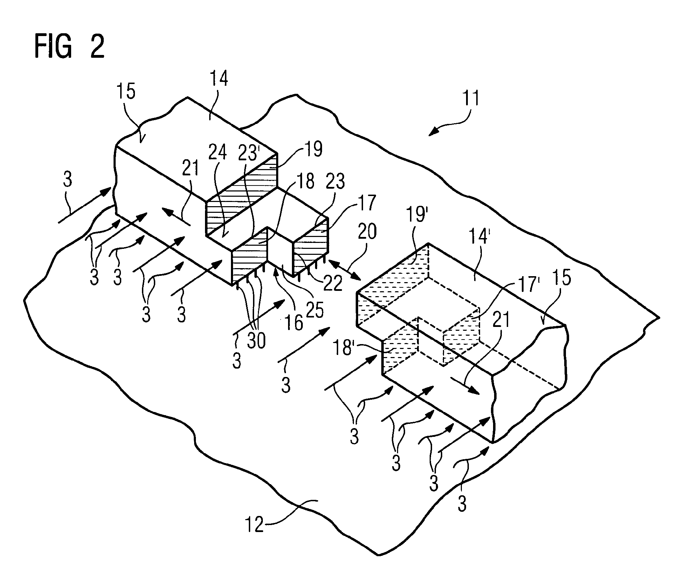

In der Figur 2 ist eine perspektivische Darstellung einer Dichtungsanordnung 11 zum Vermindern einer Leckageströmung 3 zu sehen. Die Leckageströmung 3 bildet sich in einem Spalt zwischen einem ersten Bauteil 13 und einem zweiten Bauteil 12 aus. In der Figur 2 ist der Übersichtlichkeit wegen das erste Bauteil 13 nicht dargestellt.

Die Dichtungsanordnung 11 weist zumindest zwei Segmente 14 auf. Die Segmente 14 weisen ein Befestigungsoberteil 15 zur Befestigung an das erste 13 oder zweite Bauteil 12 und eine an die Leckageströmung angrenzende Dichtfläche 16 auf. Die Segmente 14 weisen Anlageflächen 17, 18, 19 auf, die zum Anlegen der Segmente 14 aneinander ausgebildet sind. Die Dichtungsanordnung 11 zeichnet sich dadurch aus, dass die Anlageflächen 17, 18, 19 aus zumindest drei zueinander versetzten Teilanlegestirnflächen 17, 18, 19 gebildet sind. Die beiden Segmente 14 und 14' sind hierbei komplementär zueinander ausgebildet, d. h. die versetzten Teilanlegeflächen 17, 17', 18, 18' und 19, 19' sind derart ausgebildet, dass im zusammengebauten Zustand der Abstand zwischen den einzelnen Teilanlegeflächen minimal ist. Der in der Figur 2 dargestellte Abstand zwischen den Teilanlegeflächen 17, 18, 19, 17', 18', 19' ist übertrieben stark dargestellt.

Die erste Teilanlegefläche 18 ist durch eine Translation gegenüber der zweiten Teilanlegefläche 17 gebildet. Die Translation erfolgt hierbei entlang einer zur Leckageströmungsrichtung 3 im Wesentlichen senkrecht stehenden Senkrechtgeraden 20, wobei die Senkrechtgerade 20 parallel zu einer Normalen 21 der Dichtfläche 16 liegt. Eine zwischen der ersten 17 und zweiten Teilanlegefläche 18 gebildete erste Teilanlegetrenngerade 22 ist hierbei im Wesentlichen senkrecht zur Dichtfläche 16 angeordnet. Die dritte Teilanlegefläche 19 ist durch eine Translation gegenüber der ersten 17 und zweiten Teilanlegefläche 18 gebildet. Die Translation erfolgt im Wesentlichen entlang der Senkrechtgeraden 20. Eine zwischen der dritten und zweiten Teilanlagefläche gebildete zweite Teilanlegetrenngerade 23 oder eine zwischen der dritten und ersten Teilanlegefläche 17, 19 gebildete zweite Teilanlegetrenngerade 23' ist im Wesentlichen parallel zur Leckageströmungsrichtung 3 angeordnet.

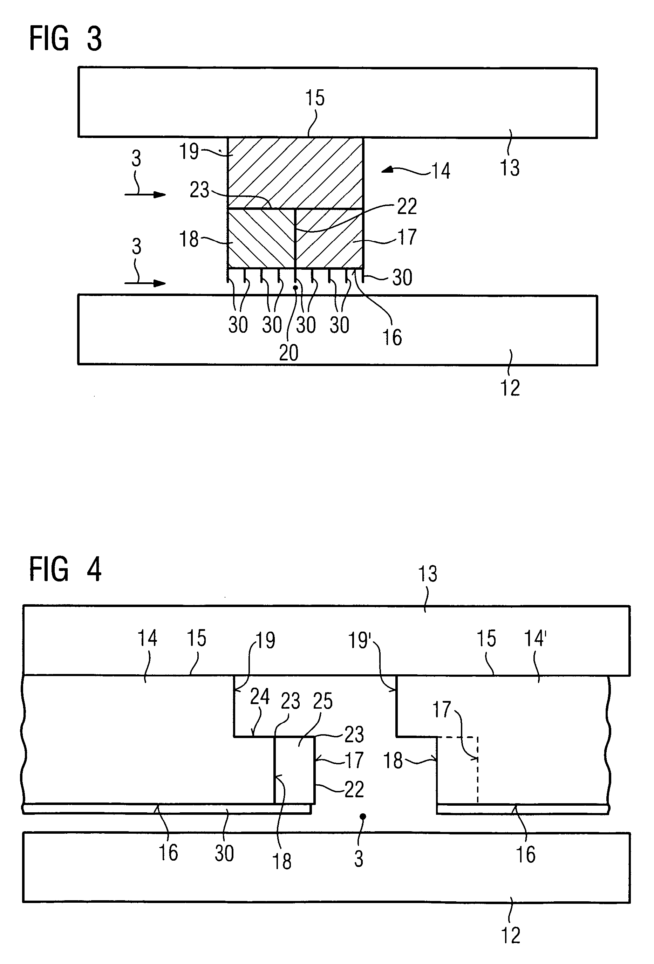

In der Figur 3 ist eine Seitenansicht der Dichtungsanordnung 11 zu sehen. Das Segment 14 ist in nicht näher dargestellter Weise am ersten oder zweiten Bauteil 13 befestigt. Die Teilanlegeflächen 17, 18, 19 sind gegeneinander versetzt angeordnet, was durch die unterschiedliche Schraffur deutlich gemacht wird. Die dadurch entstandenen Teilanlegetrenngeraden 22 und 23 sind in der Figur 3 senkrecht bzw. parallel zur Leckageströmungsrichtung 3. Andere Ausrichtungen der Teilanlegetrenngeraden 22 und 23 sind möglich. So kann die Teilanlegetrenngerade 23 unter einem gewissen Winkel zur Leckageströmungsrichtung 3 ausgebildet sein. Genauso gut kann die Teilanlegetrenngerade 22 in einem Winkel größer oder kleiner 90° gegenüber der Leckageströmungsrichtung 3 ausgebildet sein.

In der Figur 4 ist eine Forderansicht der Dichtungsanordnung 11 zu sehen. Die Leckageströmungsrichtung 3 ist hierbei senkrecht zur Blattebene. Die durch die gegeneinander durch Translation versetzten Teilanlegeflächen 17, 18, 19 ausgebildeten Querflächen 24 und 25 sind - wie in der Figur 4 dargestellt - parallel zur Dichtfläche 16 ausgebildet. Dies ist nicht zwingend erforderlich. Die Querflächen 24 bzw. 25 müssen nicht parallel zur Normalen 21 der Dichtfläche 16 ausgebildet sein.

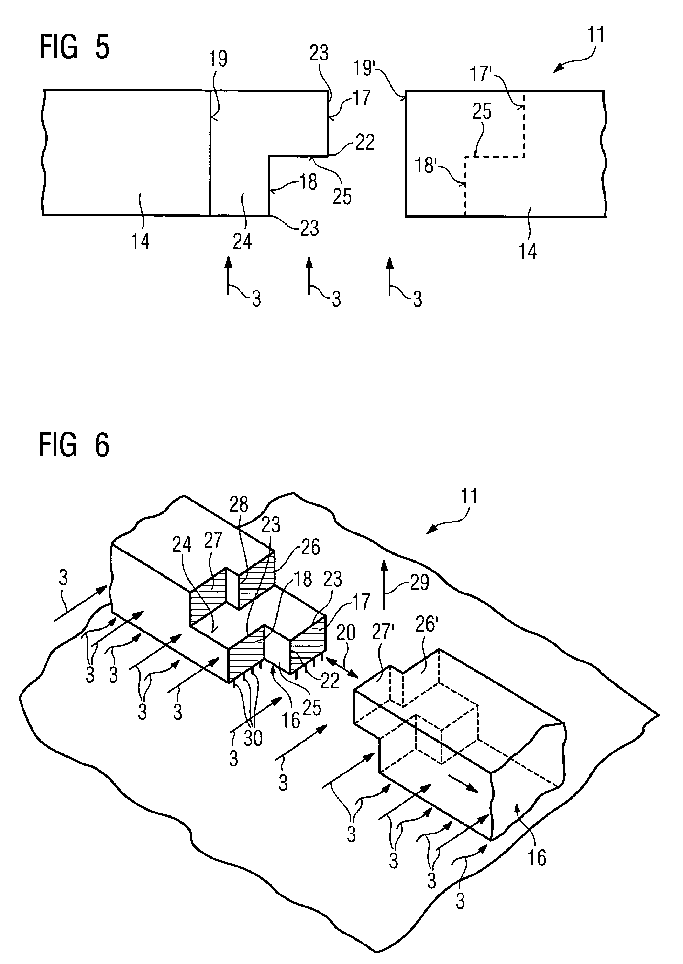

In der Figur 5 ist eine Ansicht von oben auf die Dichtungsanordnung 11 dargestellt. Der Übersichtlichkeit wegen sind das erste Bauteil 12 und das zweite Bauteil 13 nicht näher dargestellt. Die in der Figur 5 dargestellte Dichtungsanordnung 11 ist explosionsartig dargestellt. Die beiden Segmente 14 und 14' werden im betriebsgemäßen Zustand derart aneinander gelegt, dass die Teilanlegeflächen 19, 19' einen möglichst geringen Abstand zueinander haben. In der Figur 6 ist eine alternative Ausführungsform der Dichtungsanordnung 11 zu sehen. Der Unterschied zur Ausführungsform gemäß Figur 2 ist der, dass die Teilanlegefläche 19 aus einer vierten 27 und einer fünften Teilanlegefläche 27 gebildet ist. Die vierte Teilanlegefläche 27 ist hierbei durch eine Translation gegenüber der fünften Teilanlegefläche 26 gebildet, wobei die Translation entlang der Senkrechtgeraden 20 erfolgt. Eine zwischen der vierten 27 und fünften Teilanlegefläche 27 gebildete dritte Teilanlegetrenngerade 28 ist im Wesentlichen senkrecht zur Dichtfläche 16 angeordnet.

Die dritte 19, vierte 26 und fünfte 27 Teilanlegfläche ist entlang derjenigen Richtung 29 gesehen, die im wesentlichen senkrecht zur Senkrechtgeraden 20 ist, oberhalb der ersten 17 und zweiten Teilanlegefläche 18 angeordnet. Die erste Teilanlegetrenngerade 22 ist im Wesentlichen in der Mitte der Anlegefläche 17, 18 angeordnet. Im Idealfall bedeutet dass, dass die beiden Teilanlegeflächen 17, 18 dadurch gleichgroß sind.

Des Weiteren ist die dritte Teilanlegetrenngerade 23 im Wesentlichen in der Mitte der Anlegefläche 17, 18, 26, 27, 19 angeordnet. Das bedeutet, dass im Idealfall die Gesamtfläche von den Flächen 17 und 18 genauso groß ist wie die Gesamtfläche von 26 und 27. Die dritte Teilanlegetrenngerade 28 ist ebenso im Wesentlichen in der Mitte der Anlagefläche angeordnet, was dazu führt, dass die vierte 27 und fünfte Teilanlegefläche 26 gleichgroß sind.

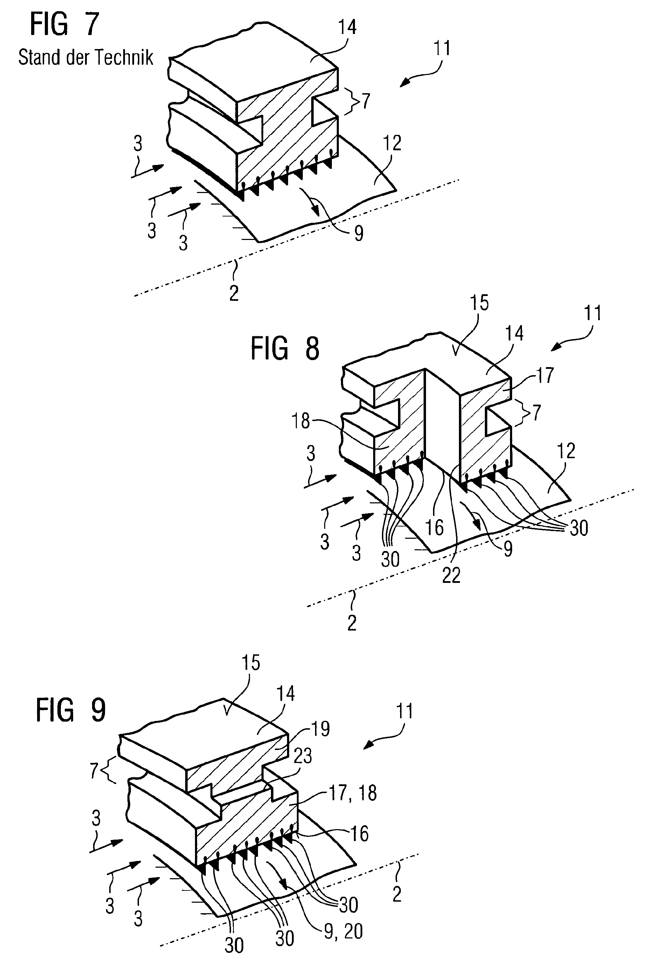

Die Dichtungsanordnung 11 ist zum Aufnehmen von Dichtmitteln 30 ausgebildet. Diese Dichtmittel können als Dichtband für eine Labyrinthdichtung oder als Bürste für eine Bürstendichtung ausgebildet sein. In der in Figur 7 dargestellten Dichtungsanordnung 11 ist lediglich ein Segment 14 dargestellt. Das Segment 14 ist bogenförmig ausgebildet. Die Anlegefläche 17, 18, 19, 26, 27 ist als eine Ebene ausgebildet. Der Übersichtlichkeit wegen ist das erste Bauteil 13 nicht näher dargestellt. Das Segment 14 weist eine Nut 8 auf, wobei das erste Bauteil 13 eine Gegennut zum Aufnehmen der Segmentes 14 aufweist. Das zweite Bauteil 12 ist als Rotor ausgebildet. Das zweite Bauteil 12 ist dabei relativ zum ersten Bauteil 13 bewegbar ausgebildet. Das zweite Bauteil 12 ist hierbei um eine Rotationsachse 2 in einer Umfangsrichtung 9 drehbar gelagert. Die in der Figur 7 dargestellte Dichtungsanordnung 11 ist eine gemäß dem Stand der Technik vorhandene Dichtungsanordnung. Die in der Figur 8 dargestellte Dichtungsanordnung 11 weist zwei Teilanlegeflächen 17, 18 die gegeneinander durch eine Translation versetzt sind, wobei die Translation entlang der Senkrechtgeraden 20, die im Wesentlichen mit der Umfangsrichtung 9 zusammenfällt gebildet ist.

Die in Figur 9 dargestellte Dichtungsanordnung weist ebenso zwei Teilanlegeflächen 17, 18 und 19 auf. Die beiden Teilanlegeflächen 17, 18 und 19 sind hierbei durch eine Translation entlang der Senkrechtgeraden 20, die mit der Umlaufrichtung 9 zusammenfällt gebildet. Wobei die Teilanlagetrenngerade 23 parallel zur Leckageströmungsrichtung 3 angeordnet ist.

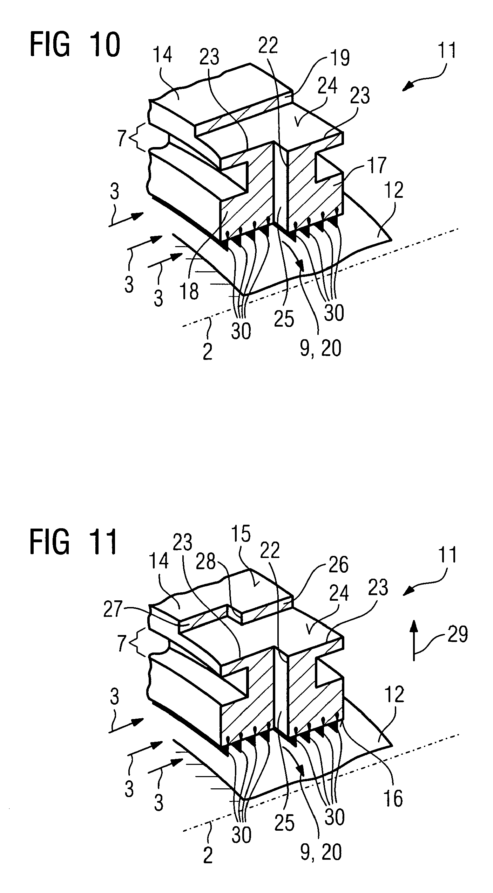

Die in der Figur 10 dargestellte Dichtungsanordnung 11 ist im Wesentlichen vergleichbar mit der Dichtungsanordnung 11 gemäß Figur 2. Der Unterschied ist jedoch, dass die Dichtungsanordnung 11 gemäß Figur 10 bogenförmig um die Rotationsachse 2 ausgebildet ist, wobei das erste Bauteil 13 als Rotor oder als Welle und das zweite Bauteil 12 als feststehendes nicht näher dargestelltes Innengehäuse ausgebildet ist.

Die in der Figur 14 dargestellt Ausführungsform ist im Wesentlichen mit der in Figur 6 dargestellten Ausführungsform vergleichbar. Der Unterschied ist hierbei der, dass wie bei der Figur 10 die Dichtungsanordnung 11 kreisbogenförmig um die Rotationsachse 2 ausgebildet ist, wobei das erste Bauteil 13 als Rotor oder als Welle 12 und das zweite nicht näher dargestellte Bauteil als Innengehäuse ausgebildet ist.

## Patentansprüche

1. Dichtungsanordnung (11) zum Vermindern einer Leckageströmung in einem Spalt zwischen einem ersten Bauteil (13) und einem zweiten Bauteil (12),
wobei die Dichtungsanordnung (11) zumindest zwei Segmente (14, 14') umfasst,
wobei im Betrieb eine Leckageströmung in einer Leckageströmungsrichtung (3) durch den Spalt strömt,
wobei die Segmente (14, 14') ein Befestigungsoberteil (15) zur Befestigung an das erste (13) oder zweite Bauteil (12) und eine an die Leckageströmung angrenzende Dichtfläche (16) aufweisen,
wobei die Segmente (14, 14') Anlageflächen (17, 18, 19, 26, 27) zum Anlegen der Segmente (14, 14') aneinander aufweisen,
**dadurch gekennzeichnet, dass**
die Anlageflächen (17, 18, 19, 26, 27) aus zumindest drei zueinander versetzten Teilanlegestirnflächen (17, 18, 19) gebildet sind.

2. Dichtungsanordnung (11) nach Anspruch 1,
bei der die erste Teilanlegefläche (18) durch eine Translation gegenüber der zweiten Teilanlegefläche (17) gebildet ist,
wobei die Translation entlang einer zur Leckageströmungsrichtung (3) im Wesentlichen senkrecht stehenden Senkrechtgeraden (20) erfolgt,
wobei die Senkrechtgerade (20) parallel zu einer Normalen (21) der Dichtfläche (16) liegt,
wobei eine zwischen der ersten (18) und zweiten Teilanlegefläche (17) gebildete erste Teilanlegetrenngerade (22) im wesentlichen senkrecht zur Dichtfläche (16) angeordnet ist und
bei der die dritte Teilanlegefläche (19) durch eine Translation gegenüber der ersten (18) und zweiten Teilanlagefläche (17) gebildet ist,
wobei die Translation entlang der Senkrechtgeraden (20) und der Normalen (21) erfolgt,
wobei eine zwischen der dritten (19) und zweiten (17) oder zwischen der dritten (19) und ersten Teilanlagefläche (18) gebildete zweite Teilanlegetrenngerade (23) im Wesentlichen parallel zur Leckageströmungsrichtung (3) angeordnet ist.

3. Dichtungsanordnung (11) nach Anspruch 2,
bei der die dritte Teilanlegefläche (19) aus einer vierten (27) und einer fünften Teilanlegefläche (26) ausgebildet ist,
wobei die vierte Teilanlegefläche (27) durch eine Translation gegenüber der fünften Teilanlegefläche (26) gebildet ist,
wobei die Translation entlang der Senkrechtgeraden (20) und der Normalen (21) erfolgt,
wobei eine zwischen der vierten (27) und fünften Teilanlegefläche (26) gebildete dritte Teilanlegetrenngerade (28) im Wesentlichen senkrecht zur Dichtfläche (16) angeordnet ist.

4. Dichtungsanordnung (11) nach einem der vorhergehenden Ansprüche,
bei der die dritte (19), vierte (27) und fünfte Teilanlegefläche (26),
entlang derjenigen Senkrechten (20) gesehen,
die im Wesentlichen senkrecht zur Normalen (22) ist, oberhalb der ersten (18) und zweiten Teilanlegefläche (17) angeordnet ist.

5. Dichtungsanordnung (11) nach Anspruch 2, 3 oder 4,
bei der die erste Teilanlegetrenngerade (22) im Wesentlichen in der Mitte der Anlegefläche (17, 18, 19, 26, 27) angeordnet ist.

6. Dichtungsanordnung (11) nach Anspruch 4 oder 5,
bei der die dritte Teilanlegetrenngerade (28) im Wesentlichen in der Mitte der Anlegefläche (17, 18, 19, 26, 27) angeordnet ist.

7. Dichtungsanordnung (11) nach Anspruch 2, 3, 4, 5 oder 6,
bei der die zweite Teilanlegetrenngerade (29) im Wesentlichen in der Mitte der Anlegefläche (17, 18, 19, 26, 27) angeordnet ist.

8. Dichtungsanordnung (11) nach einem der vorhergehenden Ansprüche,
bei der die Dichtfläche (16) zum Aufnehmen von Dichtmitteln (30) ausgebildet ist.

9. Dichtungsanordnung (11) nach Anspruch 8,
bei der das Dichtmittel (30) als Dichtband für eine Labyrinthdichtung ausgebildet ist.

10. Dichtungsanordnung (11) nach Anspruch 8,
bei der das Dichtmittel (30) als Bürsten für eine Bürstendichtung ausgebildet ist.

11. Dichtungsanordnung (11) nach einem der vorhergehenden Ansprüche,
bei der das zweite Bauteil (12) relativ zum ersten Bauteil (13) bewegbar ausgebildet ist.

12. Dichtungsanordnung (11) nach Anspruch 11,
bei der das erste Bauteil (12) als Gehäuse,
insbesondere Innengehäuse, und
das zweite Bauteil (13) als Turbinenwelle ausgebildet ist.

13. Dichtungsanordnung (11) nach einem der vorhergehenden Ansprüche,
die zur Anwendung in einer Strömungsmaschine ausgebildet ist.

14. Dichtungsanordnung (11) nach Anspruch 13,
bei der die Strömungsmaschine als Dampfturbine, Gasturbine oder Verdichter ausgebildet ist.

15. Dichtungsanordnung (11) nach einem der vorhergehenden Ansprüche,
bei der die Segmente (14, 14') mit Vorsprüngen (8) zum Aufnehmen in eine Nut (7) ausgebildet sind.
